# EUROPEAN PATENT SPECIFICATION

(11) **EP 2 817 183 B1**
(45) Date of publication and mention of the grant of the patent: **04.08.2021**
(21) Application number: 13707793.9
(22) Date of filing: 25.02.2013
(51) Int. Cl.: B60S 1/38

(54) **HINGED WIPER BLADE**
WISCHBLATT MIT EINEM SCHARNIER
BALAI D'ESSUIE-GLACES ARTICULÉ

(30) Priority: 24.02.2012 US 201261603223 P
(43) Date of publication of application: 31.12.2014
(73) Proprietor: Pylon Manufacturing Corp., Deerfield Beach, FL 33441 (US)
(72) Inventor: TOLENTINO, Vambi, Raymundo, Coconut Creek, FL 33066 (US); PEERS, Robert, Peter, Boca Raton, FL 33433 (US); CHANGE, George, Taipei 110 (TW); LO, Sandra, Taipei 110 (TW)
(74) Representative: Carpmaels & Ransford LLP
(86) International application number: PCT/US2013/027688
(87) International publication number: WO 2013/126910

(56) References cited:
- EP-A2- 2 532 558
- DE-A1- 4 439 275
- DE-U1-202011 100 429
- FR-A1- 2 747 976
- US-A- 2 310 751
- None

## Description

### CROSS REFE RENCE TO RELATED APPLICATIONS

This application claims the benefit of U.S. Provisional Application No. 61/603,223 filed February 24, 2012 and U.S. Patent Application No. 13/776,383, filed February 25, 2013.

### FIELD OF THE INVENTION

This invention relates to the field of windshield wiper blades.

### BACKGROUND

Typical wiper blades used on vehicles are plagued with numerous persistent drawbacks. In an effort to improve upon the traditional, bracketed wiper blade, the beam blade (or flat blade) was developed, keeping a lower profile and generally providing a more uniform force distribution than most bracketed wiper blades. However beam blades do not have the lateral stability of bracketed blades, and can have problems with wrapping (i.e. keeping contact between the outer edges of the wiper blade and the windshield) when their curvature is not sufficiently sharp for the windshield, and banding (i.e. losing contact with the windshield in the middle of the wiper blade, thereby leaving an unwiped band) when their curvature is too sharp for the windshield. Accordingly, beam blades may serve well for original equipment (i.e. the wiper blades installed by manufacturers on cars that are designed specifically for that car, but can experience problems on certain vehicles if designed as aftermarket wiper blades (i.e. replacement blades designed to be used on a variety of different windshields where the manufacturer does not know what vehicle the blade will be used on).

The first generation of hybrid wiper blades developed improved on beam blade performance in these circumstances. These blades combine the use of brackets with a beam to improve on the blades' wrapping characteristics without creating problems with banding. The disclosed concept provides an improvement on the first generation hybrid wiper blades, using a combination of traditional brackets and either beams or flat brackets.

The following patent applications relate as well to wiper blades: U.S. Patent Application Serial Nos. 13/453,601; 13/679,646; 13/572,100 and 13/587,389.

US2310751A describes an attaching clip for a wiper blade comprising a blade receiving seat.

FR2747976 A1 discloses a vehicle windscreen wiper having several frames pivotally connected to each other.

### BRIEF SUMMARY OF THE INVENTION

The following presents a simplified summary of the invention in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

In one embodiment of the invention it is foreseen that a wiper blade comprises a wiper strip, a primary frame, having a top side and opposite ends, a connection device capable of connecting the wiper blade to a wiper arm disposed on the top side of the primary frame, and a connection structure disposed on each of the opposite ends of the primary frame; a pair of secondary frames each having a central pivot connection portion and two leg portions extending from the central pivot connection portion, a pivot structure disposed on the central pivot connection portion of the secondary frames; wherein the pivot structure comprises a turn-buckle holder comprising a unitary structure; and wherein the turn-buckle holder further comprise a channel that receives the central pivot connection portion of the respective secondary frame, the channel comprising an upper channel wall and a lower channel wall.

### Brief Description of the Figures

Fig. 1 illustrates a perspective view from above of an embodiment of the invention. Fig. 2 illustrates a frontal view of an embodiment of the invention. Fig. 3 illustrates a perspective view from above of the primary frame of an embodiment of the invention.
Fig. 4 illustrates a perspective view from above of an alternative embodiment of the primary frame.
Fig. 5 illustrates a view of the primary frame of an embodiment of the invention along the longitudinal axis of the wiper blade.
Fig. 6a illustrates a side view of a beam of an embodiment of the invention, wherein the beam is shown flattened for simplicity.
Fig. 6b illustrates a side view of a beam of an embodiment of the invention, wherein the beam is shown in it curved state.
Fig. 7 illustrates a perspective view from above of a beam of an embodiment of the invention, wherein the beam is shown flattened for simplicity.
Fig. 8 illustrates a rivet which may be used in the joint of an embodiment of the invention.
Fig. 9 illustrates a perspective view from the side of a turn-buckle holder used in a joint of an embodiment not belonging to the invention.
Fig. 10 illustrates a view of a turn-buckle holder used in a joint of an embodiment not belonging to the invention along the axis of the channel.
Fig. 11 shows a bottom view of a turn-buckle holder used in a joint of an embodiment not belonging to the invention.
Fig. 12 shows a cross-sectional view of a turn-buckle holder used in a joint of an embodiment not belonging to the invention through the turn-buckle holder's channel.
Fig. 13 illustrates a perspective view from the side of a holder half used in a joint in an embodiment not belonging to the invention.
Fig. 14 illustrates a view of a holder half used in a joint in an embodiment not belonging to the invention along the axis of the channel.
Fig. 15 illustrates a view of a holder half used in a joint in an embodiment not belonging to the invention along the axis of the rivet passage.
Fig. 16 illustrates a bottom view of the holder half used in a joint in an embodiment not belonging to the invention.
Fig. 17 illustrates a frontal view of a symmetric tertiary bracket of an embodiment of the invention.
Fig. 18 illustrates a perspective view from above of a symmetric tertiary bracket of an embodiment of the invention.
Fig. 19 illustrates a frontal view of an asymmetric tertiary bracket of an embodiment of the invention.
Fig. 20 illustrates a perspective view from above of an asymmetric tertiary bracket of an embodiment of the invention.
Fig. 21 illustrates a perspective view of the pivoting stud of an embodiment of the invention.

### DETAILED DESCRIPTION

The following detailed description and the appended drawings describe and illustrate exemplary embodiments of the invention solely for the purpose of enabling one of ordinary skill in the relevant art to make and use the invention. As such, the detailed description and illustration of these embodiments are purely exemplary in nature and are in no way intended to limit the scope of the invention, or its protection, in any manner. It should also be understood that the drawings are not to scale and in certain instances details have been omitted, which are not necessary for an understanding of the present invention, such as conventional details of fabrication and assembly.

This patent application sets forth a novel hybrid (i.e. having both a spring elastic "beam" and one or more brackets/frames) wiper blade. Several novel concepts are introduced which can be used both with the disclosed novel wiper blade, or separately with various kinds of traditional, hybrid or beam wiper blades. These novel concepts include, but are not limited to, a novel hinge between frames of a wiper blade that is designed for hybrid wiper blades but can also be used in bracketed blades, which allows a generally thin, flat beam or beam-like frame a greater range of motion without interfering with its elasticity, and which allows the blade to keep a low wind profile.

In one example, a wiper blade may include a wiper strip, a primary frame and a pair of secondary frames. The primary frame may have a top side and opposite ends, a connection device capable of connecting the wiper blade to a wiper arm disposed on the top side of the primary frame, and a connection structure disposed on each of the opposite ends of the primary frame. The pair of secondary frame may each have a central pivot connection portion, two leg portions extending from the central pivot connection portion, and a pivot structure disposed on the central pivot connection portion of the secondary frames. The pivot structure may be a turn-buckle holder comprising two holder halves and a rivet wherein the rivet passes through the two holder halves and holds them together.

According to the present invention, the holder halves may further comprise a channel that receives the central pivot connection portion of the respective secondary frame. In such embodiments, the central pivot connection portion of the secondary frames may be provided with recesses and the holder halves are provided with projections which fit into the recesses in the central pivot connection portion of the secondary frames. In certain embodiments, the connection structure on the ends of the primary frame comprises pivot extension walls.

In certain embodiments, the secondary frame may have a generally thin structure. In certain of these embodiments, the secondary frame may be a beam. In certain other embodiments, the secondary frame may be a bracket.

In certain examples, the legs of the secondary frames may be symmetrical. In other examples, one of the two leg portions of a first beam of the pair of beams may be longer than the other leg portion of the first beam of the pair of beams. In certain examples, at least one leg portion of at least one of the secondary frames may be provided with a wiper strip holder capable of securing the wiper strip. In other embodiments wherein a pair of tertiary frames may connect to each of the secondary frames, and the tertiary frames secure the wiper strip.

In certain examples at least one tertiary frame, wherein at least one leg portion of at least one of the secondary frames may be provided with a tertiary frame connection structure, and wherein the at least one tertiary frame is connected to the tertiary frame connection structure of the least one of the secondary frames. In certain such examples, the tertiary frame may be symmetric. In other such examples, the tertiary frame has two legs descending from a middle portion and one of the two legs is longer than the other.

In certain examples, a hinge for a wiper blade capable of connecting a parent frame to a child frame may include a turn-buckle holder comprising two holder halves and a rivet, wherein the rivet passes through the two holder halves and holds them together.

According to the invention, a wiper blade may include a wiper strip, a primary frame and a pair of secondary frames. The primary frame has a top side and opposite ends, a connection device capable of connecting the wiper blade to a wiper arm disposed on the top side of the primary frame, and a connection structure disposed on each of the opposite ends of the primary frame. The pair of pair of secondary frames each have a central pivot connection portion, two leg portions extending from the central pivot connection portion, and a pivot structure disposed on the central pivot connection portion of the secondary frames. The pivot is a turn-buckle holder comprising a unitary structure.

In certain embodiments the central pivot connection portion of the secondary frames is provided with recesses and the turn-buckle holder is provided with projections which fit into the recesses in the central pivot connection portion of the secondary frames. In certain embodiments, the connection structure on the ends of the primary frame comprises pivot extension walls. In certain embodiments, the secondary frame has a generally thin structure. In certain embodiments, a pair of tertiary frames may connect to each of the secondary frames, and the tertiary frames secure the wiper strip.

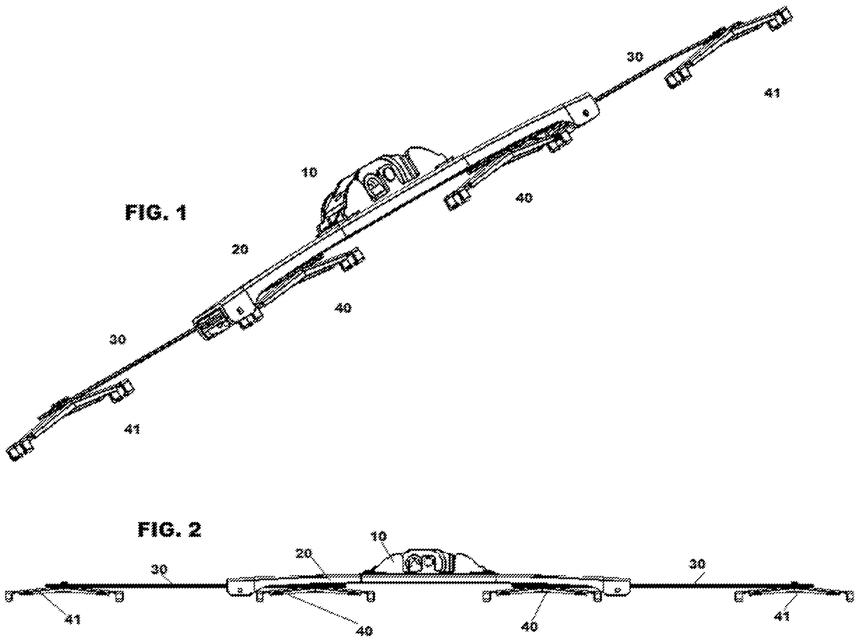

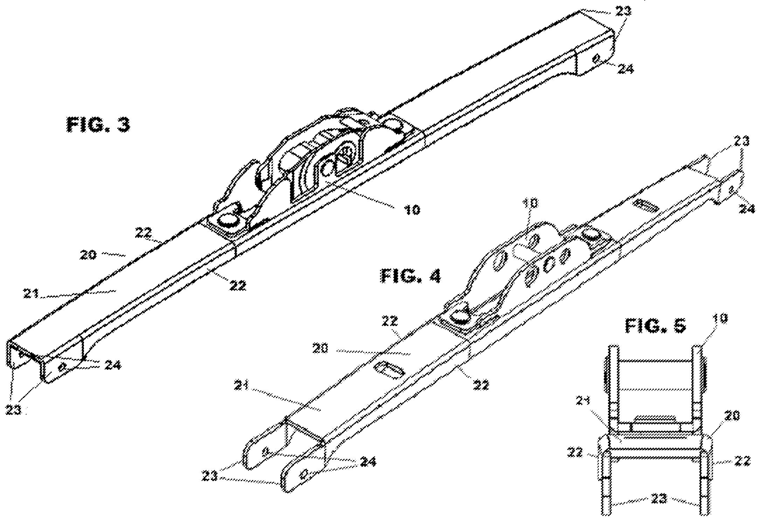

As can be seen in Figs. 1-4 the main support structure of the wiper blade preferably includes a primary frame **20** having a connection device **10** on its top side to which a connector and/or or adapter (not shown) can be used to connect the wiper blade to a wiper arm. Fig. 3 shows a connection device **10** with a connector attached. Fig. 4 shows an alternative connection device having a central rivet for connecting a connector, but where a connector is not attached. Suitable connectors which allow the wiper blade to be connected to various different types of wiper arms are known in the art, and include U.S. Patent No. 6,640,380 and U.S. Patent Application Serial Nos. 13/558,624, 13/560,585, and 13/194,070. Alternatively, the connection device **10** can be implemented to connect directly to a particular kind of wiper arm with or without the use of a connector and/or adapter. Persons of skill in the art will recognize that there are numerous types of connection devices **10** known in the art, and that the invention can be practiced with any of them. The connection device **10** may attach to the primary frame **20** through the use of welding, screws, rivets, claws, crimping or any other method known in the art. Alternatively, the connection device **10** may be an integrated part of the structure of the primary frame **20.** The connection device **10** may be made out of metal, plastic or any other suitable material known in the art or any combination of suitable materials known in the art.

The primary frame **20** may be made out of metal, plastic or any other suitable material known in the art, or any combination of suitable materials known in the art. The primary frame **20** may be straight or predominantly straight in shape when viewed from the front (as shown in Fig. 2-4), or may bear a more pronounced curvature. A connection to a pivot structure may be located at each end of the primary frame **20,** and allows the primary frame **20** to connect to a secondary frame or beam **30,** in such a manner as to allow the beam **30** to pivot about a pivot axis. A novel pivot structure is described below, but numerous variations on this structure may be used in connection with the described wiper blade within the scope of the invention.

As shown in Fig. 5, the profile of the primary frame **20** below the connection device **10,** when viewed along the longitudinal axis of the wiper blade, is preferably U shaped to add strength and rigidity to the primary frame. The primary frame may have a horizontal wall **21** from which two side walls **22** may descend vertically. The distance between the side walls **22** may be constant along the length of the primary frame **20,** or it may taper or expand as it approaches either end of the primary frame **20.** As described above, at either end of the primary frame is a connection to a pivot structure. One such connection is shown in Figs 2-5, as pivot extension walls **23.** These pivot extension walls **23** extend from the side walls **22** of the primary frame **20** and facilitate the connection of the primary frame **20** to the pivot structure. The pivot extension walls may be provided with holes **24** which will form part of the pivot structure, wherein a rivet, or protrusions may be placed to facilitate the pivoting of the beams **30.** Persons of skill in the art will recognize that various alternative pivot structures or variations on the described pivot structure might be used and remain within the scope of the invention, including without limitation providing the pivot extension walls with protrusions instead of holes, or a rivet onto which other parts of the pivot structure can attach by in any known manner, providing the turn-buckle holders, or holder halves **52** described below with projections that can enter into the holes **24** of the pivot extension walls **23,** etc.. The horizontal wall **21** may end before, or part way along, the pivot extension walls **23** (as shown in Fig. 4) in order to give the pivot structure a wider range of motion, or may optionally extend all the way to the end of, or past, the pivot extension walls **23** (as shown in Fig. 3).

As discussed in greater detail in U.S. Provisional Application No. 61/603,222, the primary frame **20** and/or the connection device **10** may also have cover-connection structures, such as projections, recesses, extension walls with holes, recesses, projections or rivets, etc., to facilitate the connection of the cover **60, 70,** or portions thereof, to the primary frame **20.**

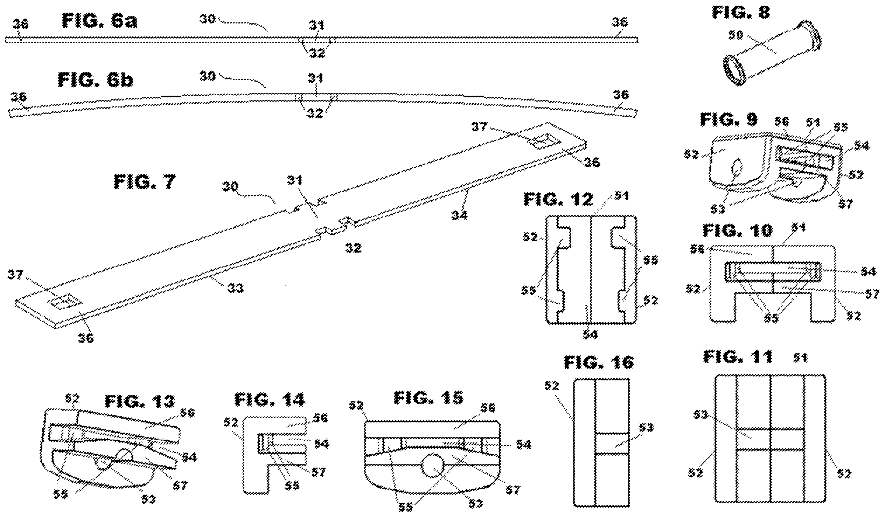

The beam **30** is preferably made out of spring-elastic steel, but any suitable material known in the art may be used. The beam is preferably curved, as shown in Fig. 6b, but is depicted flattened in Figs 1, 2, 6a and 7 for illustrative purposes. can be a curved, spring-elastic beam, making the such embodiments "hybrid" wiper blades, as they are a hybrid combining elements of a bracketed (or framed) wiper blade and a beam (or frameless) wiper blade. The beam **30** preferably has a central pivot connection portion **31,** which connects the beam **30** to the primary frame **20** via a pivot structure. The central pivot connection portion **31** is may be flattened or curved.
The central pivot connection portion **31** may have connecting structures, such as recesses **32;** projections; or pivot joint wings having either (1) a rivet or projections to attach to corresponding recesses, holes or clips in the primary frame's **20** pivot extension walls **23** or other connection to a pivot structure; or (2) recesses to receive corresponding projections, rivets, etc. in the primary frame's **20** pivot extension walls **23** or other connection to a pivot structure. Persons of skill in the art will recognize that numerous types of pivot structures can be used, whether directly connecting the beam **30** to the primary frame **20,** or as described below in the novel pivot joint presented, using an intermediary piece (or pieces) to join the two.

On either side of the central pivot connection portion **31,** the beam **30** has legs **33, 34.** The legs **33, 34** of the beam **30** may be symmetric (as shown in Figs. 6a, 6b and 7) or asymmetric. The legs **33, 34** of the beam **30** may be of the same, or different in lengths. In some embodiments, it may be advantageous to have the outer leg **33** (the leg further from the middle of the wiper blade) with a longer length than the inner leg **34** to allow a more compact primary frame **20,** while still allowing the wiper blade to wrap around the curvature of the windshield along its extremities, and improve wipe quality. Similarly, each leg **33, 34** may be independently curved. In some embodiments it may be advantageous to have the curvature of the inner leg **34** (i.e. the leg closer to the center of the wiper blade) be different than the curvature of the outer leg **33.** In some embodiments, it can be particularly advantageous to provide the inner leg **34** with a sharper curvature than the curvature of the outer leg **33** in order to provide better wrapping of the wiper blade around the curvature of a windshield, and thus improving wipe quality.

A novel method of connecting the primary frame to the beam **30** to the primary frame **20** uses a turn-buckle holder **51** made up of two holder halves **52** held together by a rivet **50.** Thus, when assembled, one holder half **52** is attached to the beam **30** opposite the other holder half **52** at the central pivot connection portion **31** wherein the central pivot connection portion **31** is inserted into the channel **54** formed between the upper channel wall **56** and lower channel wall **57** of each holder half **52.** The holder halves **52** are then pushed together such that the holder half's **52** projections **55** engage the recesses **32** on the central pivot connection portion **31** of the beam **30.** Alternatively, in embodiments where the central pivot connection portion **31** has projections, the holder halves **52** can be implemented so as to have recesses to receive such projections. Alternatively, in place of a rivet, the pivot extension walls **23** may have projections to act as a rivet, or may have recesses or holes to receive projections on the outer walls of the holder halves **52.** As discussed above, persons of skill in the art will recognize that numerous variations to the pivoting structure joining the primary frame **20** and the beam **30** that has been presented may be made within the scope of the invention.

Once the holder halves **52** have been pushed together such that the turn-buckle holder **51** contains the beam **30** within its channel **54,** the turn-buckle holder can be placed between the pivot extension walls **23** of the primary frame **20,** and a rivet **50** (shown in Fig. 8) can be passed through the holes **24** in the pivot extension walls **23** and through the rivet passage **53** in the turn-buckle holder **51** and secured on the opposite side. Persons of skill in the art will recognize that various modifications of such a structure can be made while remaining within the scope of the invention, including without limitation, providing protrusions on the pivot extension walls **23** which can engage the rivet passage **53** in the turn-buckle holder, or providing the turn-buckle holder **51** with protrusions that can engage the holes **24** in the pivot extension walls **23.** Figures 9-12 show various views of the turn-buckle holder **51.** Fig. 12, in particular, shows a cross-section of the turn-buckle holder **51** taken through the channel **54** along its plane. As can be seen in Fig. 12, the projections inside the holder halves **52** (and thus also the corresponding recesses **32** in the beam **30)** can be made of varying sizes, and need not be symmetric with the projections **55** in the opposite holder half **52.** In certain embodiments, such as that depicted in Fig. 12, two different sizes of projections **55** may be used in the holder halves **52** in order to facilitate proper alignment of the beam **30** with the turn-buckle holder **51** during assembly. In an alternative embodiment, the turn-buckle holder 51 is a unitary structure. Such a structure can be made through insert molding, where the unitary turn-buckle holder is molded around the secondary frame. This provides a tighter grip by the turn-buckle holder on the secondary frame.

Figures 13-16 show various views of a holder half **52.** As can best be seen in Figs. 13 and 15, the lower channel wall **57** may be angled, or curved in order to allow pivoting of the beam **30** within the turn-buckle holder **51,** or to facilitate the attachment of the turn-buckle holder to the secondary frame **30** by providing a wider entry point on the edges of the channel **54** in the holder half **52** while still providing a snug-fitting attachment in the middle portion of the holder half **52.** Alternatively, both the top channel wall **56** and the lower channel wall **57** may be shaped to follow the contour of the central pivot connection portion **31** of the beam **30** or to facilitate insertion of the beam **30** into the holder halves **52.** This novel pivot-hinge connection between the primary and secondary frames can be accomplished within the limited height of the pivot extension walls **23** of the primary frame **20,** and thus allows the disclosed wiper blade to maintain a relatively low profile, thereby reducing the effect of wind-lift on the wiper blade at high speeds and reducing or obviating the need for a spoiler on the wiper blade.

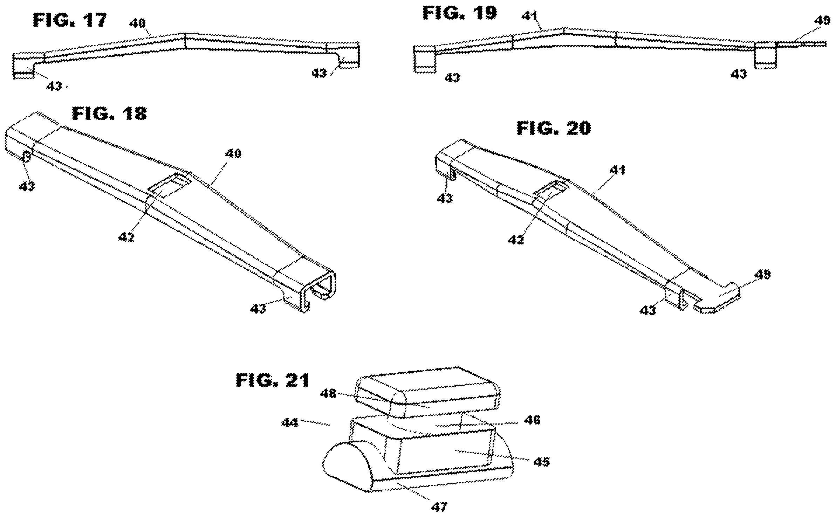

The ends of the beam **30** may either be provided with a wiper blade holder, such as the claws **43** on the tertiary frames **40, 41,** or may with a connection extension **36** having a structure to connect to a tertiary frame **40, 41.** In certain embodiments, as shown in figs. 6-7 and 17-21 the connection between the beam **30** and the tertiary frame(s) **41, 42** is formed by passing a pivoting stud **44** through a hole **42** in the central joint connection portion of the tertiary frame and a hole **37** in the connection extensions **36** on the beam **30.** As shown in Fig. 21, the pivoting stud **44** has a tertiary base portion **45** sized to fit in the hole **42** of the tertiary frame **40, 41,** and a bottom portion **47** that is wider than the hole **42** in the tertiary frame **40, 41.** Thus tertiary frame **40, 41,** is supported on the bottom portion **47** of the pivoting stud **44** when the wiper blade is assembled. Accordingly the base portion **47** may be curved (as shown in Fig. 21) or angled in order to facilitate the pivoting of the tertiary frame **40, 41.** The pivoting stud **44** is also provided with a top portion **48** and a neck **46** wherein the diameter of the neck is approximately the same as the width of top portion **48** and smaller than the length of the top portion. Both are the top portion and the neck are sized to fit into the hole **37** of the secondary frame, and the height of the neck is approximately the same as the thickness of the connection extension **36** of the secondary frame **30.** During assembly, the pivoting stud's **44** top portion **48** and neck **46** are inserted into hole **37** in the connection extension **36** of the beam **30,** and then turned such that the top portion **48** is perpendicular to the long side of the hole **37** in the connection extension **36.** Accordingly a high friction material, such as natural or synthetic rubber is preferred for the pivoting stud **44,** but plastic and/or other suitable materials may also be used. Persons of skill in the art will recognize that alternative forms of connecting the tertiary frames to the secondary frames may be used within the scope of the invention, and that any of the forms for creating a pivoting structure/joint between the primary and secondary frames discussed above could be implemented between the secondary and tertiary frames, and vice versa.

The tertiary frames **40, 41** may be symmetrical tertiary frames **40** or asymmetrical tertiary frames **41.** In certain embodiments it may be advantageous to use symmetrical tertiary frames **40** on the connection extensions **36** nearer to the middle of the wiper blade, and asymmetric tertiary frames **41** on the connection extensions **36** nearer to the extremities of the wiper blade. In such embodiments it may be advantageous to put the longer leg of the asymmetric tertiary frames **41** extending outward from the wiper blade so as to provide a better wrap around the surface of a curved windshield of a vehicle.

Whether symmetric or asymmetric, the tertiary frames are provided with claws **43** which support the wiper strip **15.** The wiper blade described herein can use any of the traditional wiper strips known in the art, which generally have a base portion having grooves into which metal vertebrae are inserted to provide lateral support for the wiper strip **15.** Alternatively, the wiper blade described above can be implemented using the wiper strip carrier described in U.S. Patent Application Serial No. 13/679,646, which is incorporated herein by reference in its entirety, and is attached hereto.

The primary frame, tertiary frame, and/or beam may be provided with cover securing devices which can assist in the securing of a cover or spoiler onto the wiper blade. Alternatively, a cover or a spoiler can be structured so as to grip, or otherwise be secured to the frames and beams **30** of the invention. Some covers which may be used with the invention are described in the U.S. Provisional Application 61/603,222. Any such cover or spoiler known in the art may be used with the invention, and can be secured to the invention in any way known in the art.

## Claims

1. A wiper blade comprising:
a wiper strip (15),
a primary frame (20), having a top side and opposite ends, a connection device (10) capable of connecting the wiper blade to a wiper arm disposed on the top side of the primary frame (20), and a connection structure disposed on each of the opposite ends of the primary frame (20);
a pair of secondary frames (30) each having a central pivot connection portion (31) and two leg portions (33, 34) extending from the central pivot connection portion, a pivot structure disposed on the central pivot connection portion of the secondary frames;
wherein the pivot structure comprises a turn-buckle holder (51) comprising a unitary structure; and **characterized in that**
the turn-buckle holder (51) further comprise a channel (55) that receives the central pivot connection portion of the respective secondary frame, the channel comprising an upper channel wall (56) and a lower channel wall (57).

2. The wiper blade of claim 1 wherein the central pivot connection portion of the secondary frames is provided with recesses and the holder halves are/turn-buckle holder is provided with projections which fit into the recesses in the central pivot connection portion of the secondary frames.

3. The wiper blade of claim 1 wherein the connection structure on the ends of the primary frame (20) comprises pivot extension walls (23).

4. The wiper blade of claim 1 wherein the secondary frame (30) has a generally thin structure.

5. The wiper blade of claim 4 when dependent upon claim 1 wherein the secondary frame is a beam, or a bracket.

6. The wiper blade of claim 1 wherein a pair of tertiary frames (40, 41) connect to each of the secondary frames (30), and the tertiary frames (40, 41) secure the wiper strip (15).

## Patentansprüche

1. Wischerblatt, umfassend:
eine Wischerleiste (15),
einen primären Rahmen (20), der eine Oberseite und gegenüberliegende Enden aufweist, eine Verbindungsvorrichtung (10), die in der Lage ist, das Wischerblatt mit einem an der Oberseite des primären Rahmens (20) angeordneten Wischerarm zu verbinden, und eine an jedem der gegenüberliegenden Enden des primären Rahmens (20) angeordneten Verbindungsstruktur;
ein Paar sekundärer Rahmen (30), die jeweils einen mittigen Drehverbindungsabschnitt (31) und zwei sich von dem mittigen Drehverbindungsabschnitt erstreckende Schenkelabschnitte (33, 34) aufweisen, eine an dem mittigen Drehverbindungsabschnitt der sekundären Rahmen angeordnete Drehstruktur;
wobei die Drehstruktur einen Spannschlosshalter (51) umfasst, der eine einstückige Struktur aufweist; und
**dadurch gekennzeichnet, dass**
der Spannschlosshalter (51) ferner einen Kanal (55) umfasst, der den mittigen Drehverbindungsabschnitt des jeweiligen sekundären Rahmens aufnimmt, wobei der Kanal eine obere Kanalwand (56) und eine untere Kanalwand (57) umfasst.

2. Wischerblatt gemäß Anspruch 1, wobei der mittige Drehverbindungsabschnitt der sekundären Rahmen mit Aussparungen versehen ist und die Halterhälften/der Spannschlosshalter mit Vorsprüngen versehen sind/ist, die in die Aussparungen im mittigen Drehverbindungsabschnitt der sekundären Rahmen passen.

3. Wischerblatt gemäß Anspruch 1, wobei die Verbindungsstruktur an den Enden des primären Rahmens (20) Drehverlängerungswände (23) umfasst.

4. Wischerblatt gemäß Anspruch 1, wobei der sekundäre Rahmen (30) eine im Allgemeinen dünne Struktur aufweist.

5. Wischerblatt gemäß Anspruch 4 in Abhängigkeit von Anspruch 1, wobei der sekundäre Rahmen ein Balken oder eine Schelle ist.

6. Wischerblatt gemäß Anspruch 1, wobei ein Paar tertiärer Rahmen (40, 41) mit jedem der sekundären Rahmen (30) verbunden ist und die tertiären Rahmen (40, 41) die Wischerleiste (15) sichern.

## Revendications

1. Balai d'essuie-glace comprenant :
une bande d'essuie-glace (15),
un cadre primaire (20), ayant un côté supérieur et des extrémités opposées, un dispositif de liaison (10) pouvant relier la bande d'essuie-glace à un bras d'essuie-glace disposé sur le côté supérieur du cadre primaire (20), et une structure de liaison disposée sur chacune des extrémités opposées du cadre primaire (20) ;
une paire de cadres secondaires (30), chacun ayant une partie de liaison à pivot central (31) et deux parties de jambe (33, 34) s'étendant à partir de la partie de liaison à pivot central, une structure de pivot étant disposée sur la partie de liaison à pivot central des cadres secondaires ;
la structure de pivot comprenant un support de tendeur (51) comprenant une structure unitaire ; et **caractérisé en ce que**
le support de tendeur (51) comprend en outre un canal (55) qui reçoit la partie de liaison à pivot central du cadre secondaire respectif, le canal comprenant une paroi de canal supérieure (56) et une paroi de canal inférieure (57).

2. Balai d'essuie-glace selon la revendication 1, la partie de liaison à pivot central des cadres secondaires étant munie d'évidements et les moitiés de support sont / le support de tendeur est muni (es) de saillies qui s'insèrent dans les évidements dans la partie de liaison à pivot central des cadres secondaires.

3. Balai d'essuie-glace selon la revendication 1, la structure de liaison sur les extrémités du cadre primaire (20) comprenant des parois d'extension de pivot (23) .

4. Balai d'essuie-glace selon la revendication 1, le cadre secondaire (30) ayant une structure généralement mince.

5. Balai d'essuie-glace selon la revendication 4, lorsqu'elle dépend de la revendication 1, le cadre secondaire étant une poutre ou un support.

6. Balai d'essuie-glace selon la revendication 1, une paire de cadres tertiaires (40, 41) étant reliés à chacun des cadres secondaires (30), et les cadres tertiaires (40, 41) fixant la bande d'essuie-glace (15).
